# EUROPEAN PATENT APPLICATION

(11) **EP 0 524 769 A2**
(43) Date of publication of application: **27.01.1993**
(21) Application number: 92306510.6
(22) Date of filing: 16.07.1992
(51) Int. Cl.: B01D 61/36, B01D 63/00

(54) **Apparatus for a method of fluid separation**

(30) Priority: 25.07.1991 GB 9116017
(71) Applicant: ALVAL PROCESS ENGINEERING LTD., Leven, Fife KY8 5HD (GB)
(72) Inventor: Fleming, Albert, Upper Largo, Fife KY8 6EN (GB); Miller, David W., Leven, Fife (GB)
(74) Representative: Ede, Eric

(57) **Abstract**

An apparatus for fluid separation comprises co-axial tubular inner and outer surface members 11,10, a membrane 20 mounted therebetween in tubular disposition and baffle means 13 to direct fluid from an inlet means 26 over the surface of the membrane 20 to an outlet means 33.

## Description

This invention relates to apparatus for and a method of fluid separation, in particular separation via a pervaporation membrane.

Present methods of pervaporation depend upon the plate and frame principle in which an assembly of modules stacked vertically is formed from a number of stainless steel plates and spacers, each plate carrying a gasket or membrane of a special grade of polymers of PTFE or flexible graphite depending on the operating conditions.

Producing an effective seal at the edge of the plate and frame is extremely difficult and when the complete system comprises a number of plates stacked together,,the problem becomes immense. Not only is there a sealing problem but determining where there is a leak and curing it without creating further leaks is difficult.

Initial workers in this field have pursued the plate and frame principle because the manufacture of membrane material has been such that only relatively small squares could be made. However, with the advent of better manufacturing methods and materials for the membrane, infinitely long sheets can now be made.

An object of the invention therefore is to provide a method of and apparatus for pervaporation which avoids the disadvantages of the plate and frame principle.

According to one aspect of the present invention there is provided a method of fluid separation including the step of passing the fluid over a membrane which is mounted in a tubular disposition, the path of the fluid being directed by baffle means so that the fluid passes over the major surface area of the membrane.

Preferably, the fluid takes a spiral path over the membrane extending from one end of the membrane to the other.

According to another aspect of the present invention there is provided apparatus for fluid separation, said apparatus comprising tubular inner and outer surface members, a membrane mounted therebetween in tubular disposition and baffle means to direct fluid from an inlet means over the surface of the membrane to an outlet means.

Preferably, said inner and outer surfaces are formed by an inner vessel removably located in an outer vessel.

Preferably also, each vessel has an end wall at one end thereof to form a passage therebetween when the inner vessel is located with the outer vessel.

Preferably also, the membrane is carried on the inner vessel and said baffle means is carried on said outer vessel.

Preferably also, the membrane is supported on a membrane carrier mounted on the inner vessel and it comprises a length of membrane material spirally wound onto the carrier and sealed at the overlapping surfaces.

An embodiment of the present invention will now be described, by way of example, with reference to the accompanying drawings, in which:
Fig 1 is a sectional elevation of apparatus for fluid separation according to one aspect of the invention;
Fig 2 is a detail of A in Fig 1 to an enlarged scale;
Fig 3 is a detail of B in Fig 1 to an enlarged scale;
Fig 4 is a detail of the membrane on supporting carrier;
Fig 5 is a sectional elevation of an alternative embodiment of the present invention;
Fig 6 is a detail of A and B in Fig 5 to an enlarged scale;
Fig 7 is a plan view of the apparatus of Fig 5; and
Fig 8 is a sectional view of the line D-D of Fig 5.

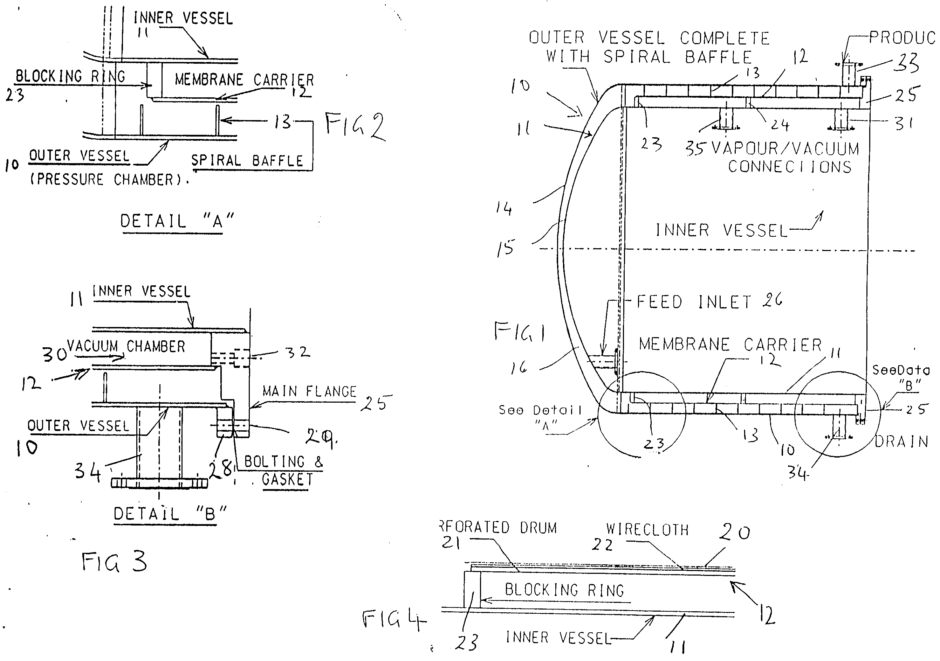

Referring firstly to Figs 1 to 4 of the drawings, the apparatus includes an outer tubular vessel 10 an inner tubular vessel 11, a membrane carrier 12 which is mounted on the outer surface of the inner vessel and a spiral baffle 13 which is mounted on the inner surface of the outer vessel.

The outer and inner tubular vessels are conveniently cylindrical but other cross section forms could be used as desired.

Each vessel 10, 11 is closed at one end by a dishing (walls 14, 15), the wall of the inner vessel having, in this embodiment a deeper curvature so that the space between the walls forms a passage 16 which narrows towards the crown of the domes.

The vessels are disposed with their longitudinal axes horizontal, but can be mounted vertically should the process site determine otherwise.

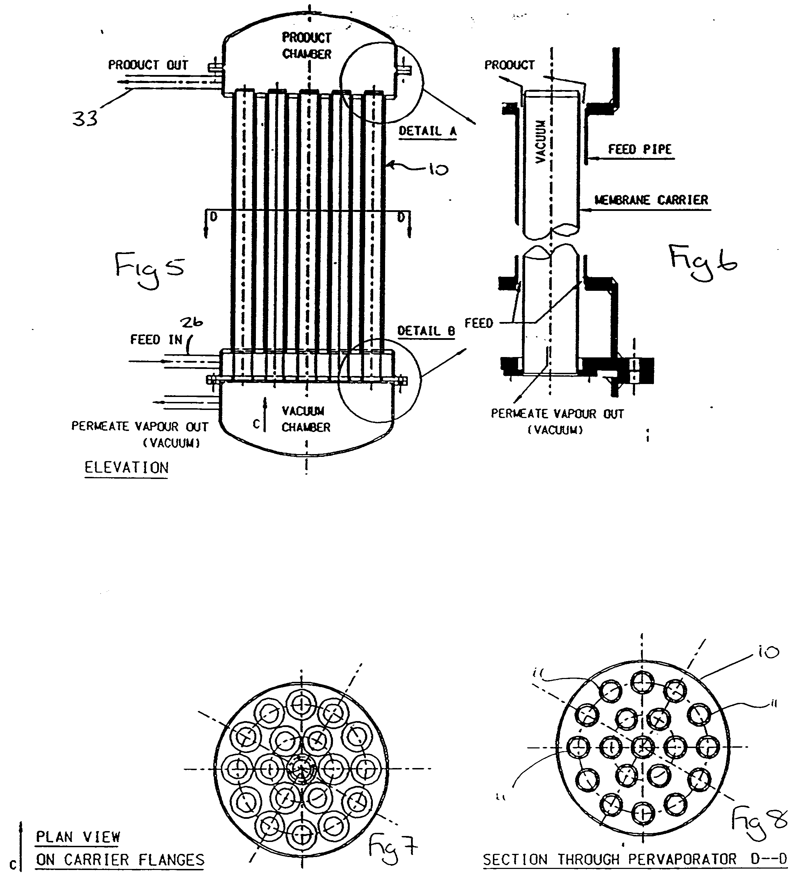

A pervaporator membrane 20 is laid over the membrane carrier 12 which, as illustrated in Fig 4 comprises a perforated drum 21 to which is attached wire cloth 22. The gauge and weave of the cloth are selected to produce the desired result.

The drum 21 is an assembly which is mounted over blocking rings 23, 24 on the outer surface of the inner vessel, one ring 23 being at one end and the other 24 being mid way of the length of the vessel. At the other end is a flange 25 and the drum assembly includes a portion which is mounted over the central ring 24 and the flange 25.

The membrane 20 is in the form of a long length of membrane material which is spirally wound around the carrier 12 from one end to the other. A pad (not shown) may be attached to a trunnion to facilitate the winding of the membrane around the carrier. At the overlaps the membrane material is sealed either by heat or chemically. At each end of the inner vessel the membrane rests on blocking ring 23 and against the flange 25 and clamping devices (not shown) seal the membrane.

Thus, there are only three places where sealing takes place, at each end in the overlap areas. All these joints can be visually and hydraulically tested prior to assembly of the inner vessel in the outer vessel.

The inner vessel also has, in its end wall 15 a fluid feed pipe 26 which opens into the passage 16 between the ends 14, 15 of the vessels 10, 11.

The outer vessel 10 has a flange 28, Fig 3 around its outer end to engage with the flange 25 of the inner vessel for bolting the two vessels together at 29 when the inner vessel 11 is located within the outer vessel 10. In this condition the annular space between the membrane carrier 12 and the wall of the inner vessel forms a vacuum chamber 30 via a vacuum connection port 31, (Fig 1) in the inner vessel 11. A relief valve and vacuum gauge 32, (Fig 3) in the flange 25 is provided to break the vacuum when required.

The outer vessel 10 also has two ports 33, 34 adjacent to its outer end, these ports being diametrically opposed, in this embodiment. One port 33 extends through the upper surface of the vessel and the other 34 through the lower surface, the upper port 33 being for product outlet and the lower port 34 being a drain.

The inner vessel also carries a port 35, on its upper surface for vapour connections.

When the two vessels have been connected together, the volume inside the composite vessel is open to atmosphere and can be used to house equipment associated with the pervaporisation process such as pumps, heat exchangers, valves, pipes etc., thus making the complete assembly compact.

A frame (not shown) may be provided to ensure alignment of the two vessels, thus preventing damage to the surface of the membrane during assembly.

In use, fluid such as ethyl alcohol and water is fed into passage 16 and is then guided by the baffles 13 to run spirally over the membrane and achieve maximum surface contact. The fluid is under pressure, e.g. 30 p.s.i. with a vacuum (equivalent to 15 p.s.i.) drawn on the underside of the membrane to give a total a pressure gradient across the membrane of, e.g. 45 p.s.i.

As the fluid passes over the membrane the water migrates through the membrane into the evacuated section and leaves the pervaporator via point 35 as water vapour, while the alcohol, depleted of water, leaves the pervaporator via point 33 as dehydrated alcohol or via the drain point 34.

Figures 5 to 8 show an alternative embodiment of the present invention in which the inner vessel 11 is replaced by a plurality of cylindrical vessels 11. The outer vessel 10 is replaced by a feed-in chamber which interconnects to the feed-out chamber by a series of tubular feed pipes. This arrangement provides for a constant velocity flow of feed over the membrane surface of smaller annulus area than that so far obtainable on the single tubular unit.

The membrane carrier is of similar design to that of the above described embodiment but would be engineered as a flanged cartridge unit, open at the flanged end, and closed at the other. The cartridge would be inserted at the lower end of the unit so that any entrained liquid would drain into the vacuum chamber, otherwise the cartridge would flood.

The membrane cartridges may be dismantled from the multitube unit by unbolting the lower chamber, and removing the cartridges for inspection of surface coating or if required replacement of these by membranes of different coatings to suit other separations.

The cartridges may be produced to closer dimension tolerances, and coatings of various types held in store to suit particular applications.

The above unit may be serviced by a feed tank and external heat exchanger similar to that in the single tubular unit.

Another advantage of the multi-tubular unit is that for the same volume of plant, the surface area of 3 M² for the single unit, would be increased to 6 M².

The multi-tubular configuration by have an internal condensing coil and baffle arrangement located in the lower vacuum chamber whereby the condensate would drain into the receiver as per the single pervaporator.

It will be appreciated that the cylindrical construction allows for variations in length and diameter thus providing a wide range of sizes of exposed membrane area.

In addition, single modules can be stacked up on gantries/steel decks and so interconnect with each other to provide complete processing plants.

It is to be further appreciated that a plurality of inlet pipes 26, outlet pipes 33 and vapour outlets 35 may be provided. Similarly, the perforated membrane may be provided in multiple banks.

It is envisaged that fluid may be fed into passage 16 at one or more starting positions and means may be mounted on the spiral baffle 13 to alter the flow rate, of fluid through the passage 16.

Such advantages of the pervaporator as hereinbefore described are as follows:
* New method of sealing membranes,
* Reduces number of seals,
* Makes formation of a good seal easier,
* Simple methods to check seal without disassembly,
* Pervaporator can be made any size,
* Pervaporator can be modular to allow testing at clients' premises,
* Space inside pervaporator unit used to house ancillary equipment,
* Allows easy and straightforward feed and product connections,
* Allows formation of a sensibly sized vacuum section; resulting low pressure drops in the vapour flow-out,
* Method of construction is of low cost,
* Construction and assembly can be carried out be normal technicians.

## Claims

1. Apparatus for fluid separation, said apparatus comprising tubular inner and outer surface members, a membrane mounted therebetween in tubular disposition and baffle means to direct fluid from an inlet means over the surface of the membrane to an outlet means.

2. Apparatus according to claim 1, wherein the inner and outer surfaces are formed by an inner vessel removably located in an outer vessel.

3. Apparatus according to claim 2, wherein each vessel has an end wall at one end thereof to form a passage therebetween when the inner vessel is located with the outer vessel.

4. Apparatus according to claim 2, or 3, wherein the membrane is carried on the inner vessel and the baffle means is carried on the outer vessel.

5. Apparatus according to claim 4, wherein the membrane is supported on a membrane carrier mounted on the inner vessel and comprises a length of membrane arterial spirally wound onto the carrier and sealed at the overlapping surfaces.

6. Apparatus according to any one of claims 1 to 5 wherein the inner surface is formed by a plurality of inner vessels removably located in the outer vessel.

7. A method of fluid separation including the step of passing the fluid over a membrane which is mounted in a tubular disposition, the path of the fluid being directed by baffle means so that the fluid passes over the major surface area of the membrane.

8. A method according to claim 6, wherein the fluid follows a spiral path over the membrane extending from one end of the membrane to the other.
